# EUROPEAN PATENT SPECIFICATION

(11) **EP 1 931 114 B1**
(45) Date of publication and mention of the grant of the patent: **28.07.2010**
(21) Application number: 06025451.3
(22) Date of filing: 08.12.2006
(51) Int. Cl.: H04L 29/12, H04L 29/08

(54) **Method and apparatus for detecting the IP address of a computer and location information associated therewith**
Verfahren und Vorrichtung zur Erkennung der IP-Adresse eines Computers und damit verbundene Standortinformation
Procédé et appareil de détection de l'adresse IP d'un ordinateur, et information de localisation associée

(43) Date of publication of application: 11.06.2008
(73) Proprietor: UBS AG, 8001 Zürich (CH)
(72) Inventor: Ott, Robert, 8360 Eschlikon (CH)
(74) Representative: Jehle, Volker Armin

(56) References cited:
- US-A1- 2003 110 293
- US-A1- 2004 203 900
- US-A1- 2006 056 317
- US-B1- 6 665 715

## Description

The invention relates to a method for operating a computer network, a computer network, and a computer program with program code for performing the method when the program is executed on a plurality of computers.

In particular, the invention relates to a method for detecting an address, in particular, an IP address of a computer in a computer network, and/or country / location information associated with the computer and/or the IP address.

The Internet is a worldwide, publicly accessible network of interconnected computers / computer networks that transmit data by packet switching using the Transmission Control Protocol (TCP), and the Internet Protocol (IP).

The Internet can be seen as a "network of networks" that consists of millions of smaller domestic, academic, business, and government networks, which together carry various information and services, such as electronic mail, online chat, file transfer, and interlinked Web pages and other documents of the World Wide Web.

The Internet and the World Wide Web are not synonymous: the Internet is a collection of interconnected computer networks / computers, linked by copper wires, fiber-optic cables, wireless connections, etc.; the World Wide Web is a collection of interconnected documents and other resources, linked by hyperlinks and URLs (Uniform Resource Locators). The World Wide Web is accessible via the Internet. An Intranet can be understood as a "private version of the Internet", or as a version of the Internet confined to an organization, e.g., a bank, an insurance company, etc.

An Intranet is a private computer network that uses Internet protocols, such as TCP/IP, network connectivity, and possibly the public telecommunication system to securely share part of an organization's information with its employees.

Some web based applications, stored in a respective web application server, require information regarding the country / location from where a user - e.g. via a web client - accesses a respective application.

When the application is deployed within an Intranet, for this purpose, a table or list or file might be used, wherein for each web client IP address the associated country / location information is stored ("country / location lookup table").

If the user accesses the web application server directly - without any intermediate HTTP proxy server - via a respective web client, the IP address of the web client (and hence, by use of the lookup table, also the respective country / location information) can easily be determined: In this case, the client's IP address corresponds to the "remote-address" of the respective TCP/IP connection.

If, however, the user accesses the web application via one or several intermediate HTTP proxy servers, the IP address of the client does not correspond to the "remote-address" of the respective TCP/IP connection. However, the HTTP proxy servers can be configured to extend the standard HTTP header "X-forwarded-For" with the client's IP address. More precisely, the HTTP proxy servers may be configured such that the respective "X-forwarded-For" HTTP header is added/modified such that the HTTP header received at the web application server does not only comprise the IP address of the HTTP proxy server (directly) connected with the web application server, but also the IP addresses of all other HTTP proxy servers between the web application server, and the client, as well as the client's IP address.

Hence, if an Intranet only comprises HTTP proxy servers configured as said above, again, by use of the above "country / location lookup table", information regarding the country / location from where a user accesses a respective web application can be detected (by first detecting the client's IP address - as explained above - and then using the "country / location lookup table" to determine which country / location is associated with the respective IP address).

To enhance the security of Internet / Intranet connections, TLS (Transport Layer Security) and its predecessor, SSL (Secure Sockets Layer) protocols might be used. TLS / SSL are cryptographic protocols that allow client / server applications to communicate in a way to prevent eavesdropping, tampering, message forgery, etc.

However, if an HTTP connection is established using TLS / SSL, respective HTTP proxy servers between a client and a web application server cannot add or modify HTTP headers, because the content exchanged between the client and the server - including HTTP headers - is encrypted, and therefore, immutable by the HTTP proxy servers.

Hence, the HTTP proxy servers cannot extend the HTTP header "X-forwarded-For" with the client's IP address, as explained above. Therefore, the web application server cannot detect the client's IP address, and thus cannot determine the country / location associated with the respective IP address by use of the "country / location lookup table".

In the US 2004/0203900 A1, there is described a process and a system for providing location information for a wireless unit in a wireless network to a location-based service provider.

The invention provides a method for operating a computer network as defined in independent claim 1, a computer network as defined in independent claim 7, and a computer program with program code for performing the method when the program is executed on a plurality of computers as defined in independent claims 8.

Advantageously, the detected location information is transmitted by use of URL encoding.

Further features and advantages of the present invention will become apparent from the following detailed description of the invention made with reference to the accompanying drawings.

The accompanying drawings are included to provide a further understanding of the present invention and are incorporated in and constitute a part of this specification. The drawings illustrate embodiments of the present invention and together with the description serve to explain the principles of the invention. Other embodiments of the present invention and many of the intended advantages of the present invention will be readily appreciated as they become better understood by reference to the following detailed description.
Figure 1 schematically illustrates a section of an Intranet computer system according to an embodiment of the invention.
Figure 2 schematically illustrates an example of a country / location lookup table that might be used in the Intranet computer system shown in Figure 1.
Figure 3 schematically illustrates method steps used according to an embodiment of the invention to detect the IP address of a client, and the country / location associated with the respective IP address.
Figure 4 schematically illustrates the interaction of components of the Intranet computer system shown in Figure 1 to perform the method steps according to the embodiment of the invention.

In the following Detailed Description, reference is made to the accompanying drawings, which form a part hereof, and in which is shown by way of illustration specific embodiments in which the invention may be practiced. It is to be understood that other embodiments may be utilized and structural or other changes may be made without departing from the scope of the present invention. The following detailed description, therefore, is not to be taken in a limiting sense, and the scope of the present invention is defined by the appended claims.

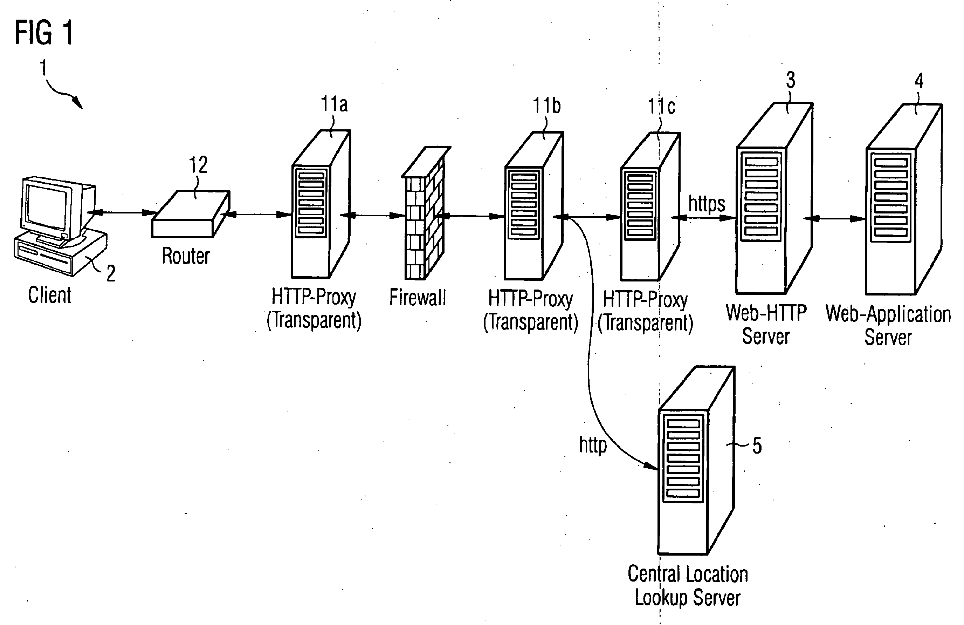

Figure 1 schematically illustrates a section of an Intranet computer system 1 according to an embodiment of the invention. The system 1 comprises a plurality of computers (or, more generally speaking, electronic devices) - e.g. respective PCs (personal computers) 2, work station computers, server computers 3, 4, 5, etc.

Between the computers 2, 3, 4, 5 data might be exchanged using the Transmission Control Protocol (TCP), and the Internet Protocol (IP).

The Intranet computer system 1 shown in Figure 1 can be understood as a "private version of the Internet", or as a version of the Internet confined to an organization, e.g., a bank, an insurance company, etc.

The Intranet computer system 1 - here: of a bank - might be used to securely share part of the respective organization's information with its employees.

To the Intranet computer system 1, hundreds or thousands of computers 2, 3, 4, 5 might be connected.

The computers 2, 3, 4, 5 might be located at a plurality of different locations /countries.

Some web based applications, stored in a respective web application server (e.g., the above server computer 4), require information regarding the country / location from where a user accesses a respective application.

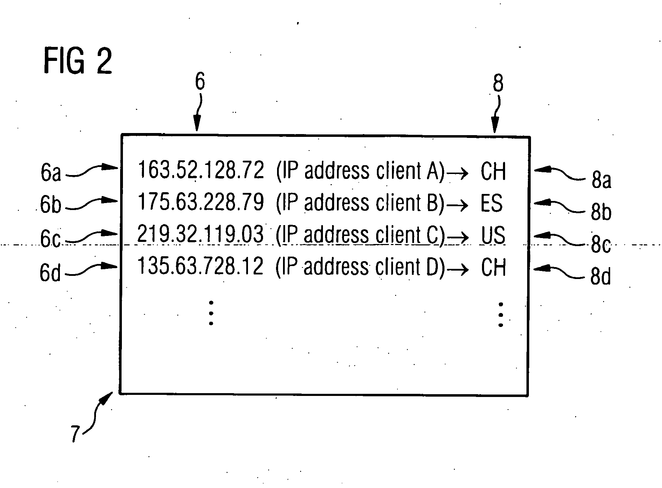

For this purpose, a table or list or file might be used, wherein for IP addresses of respective computers 2, 3, 4, 5, the associated country / location information is stored ("country / location lookup table" 7, see Figure 2).

As is shown in Figure 2, each IP address e.g. might comprise four groups of numbers, separated by respective dots.

As is further shown in Figure 2, the country / location lookup table 7 might comprise two - or-more - groups of data fields: A first group of data fields 6a, 6b, 6c, 6d for storing respective IP addresses of computers 2, 3, 4, 5 comprised in the above Intranet computer system 1 (here: of clients A, B, C, D of the computer system, etc.), and a second group of data fields 8a, 8b, 8c, 8d for storing information regarding country / location information - e.g., respective country codes - associated with the respective IP addresses (and hence, the respective clients A, B, C, D).

For instance, according to the specific example shown in Figure 2, the country /location lookup table 7 indicates that a first client A with the IP address "163.52.128.72" is located in Switzerland (here: country code "CH"), that a second client B with the IP address "175.63.228.79" is located in Spain (here: country code "ES"), that a third client C is located in the USA (here: country code "US"), and that a fourth client D is located in Switzerland (here: country code "CH").

As country code, any suitable code might be used, in particular, for example, the 2-digit country code according to ISO-3166, etc.

Instead of the above country information (and/or in addition thereto), respective (further) location information might be stored in the table 7, e.g. information regarding the canton / province / state / city where a respective client is located, etc., etc.

According to a first embodiment of the invention, for each and every computer 2, 3, 4 of the Intranet computer system 1, the respective IP address, and the associated country / location information is stored in the table 7.

In a further - alternative - embodiment, for the computers 2 of a first group of the computers of the Intranet computer system 1, the respective IP addresses, and the associated country / location information is stored in the table 7. However, for the computers of a second group, the respective IP addresses are not stored in the table 7 (or e.g. the IP addresses, but not the associated country / location information, etc.).

If a user accesses the web application stored in the server computer 4 directly - without any intermediate HTTP proxy server - via a respective web client (here: the client computer 2), the IP address of the web client can easily be determined: In this case, the client's IP address corresponds to the "remote-address" of the respective TCP/IP connection.

After having detected the client's IP address, the above "country / location lookup table" 7 shown in Figure 2 is used to determine which country / location is associated with the respective IP address.

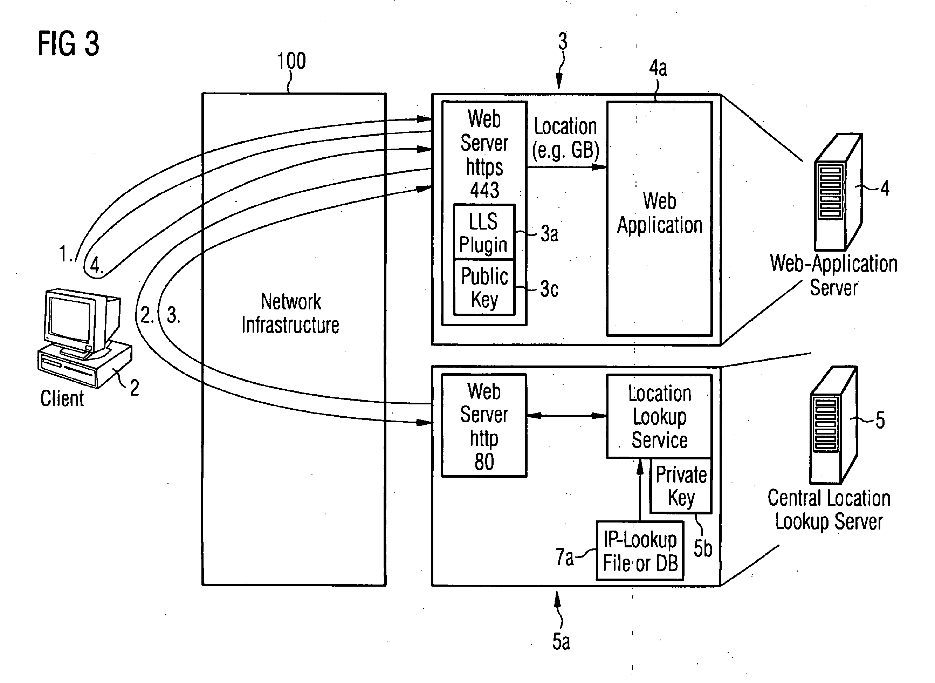

As is further shown in Figure 1, the Intranet computer system 1 also comprises several HTTP proxy servers 11a, 11b, 11c, router computers 12, firewalls 13, etc. (e.g., tens or hundreds or thousands of HTTP proxy servers 11a, 11b, 11c, tens or hundreds or thousands of router computers 12, firewalls 13, etc., i.e., respective "network infrastructure" 100 (see also Figure 3)).

If - as is shown in Figure 1 - the user accesses the web application stored on the server computer 4 via one or several of the above HTTP proxy servers (here: the HTTP proxy servers 11a, 11b, 11c), the IP address of the client does not correspond to the "remote-address" of the respective TCP/IP connection.

However, all the (tens or hundreds or thousands) HTTP proxy servers 11a, 11b, 11c in the Intranet computer system 1 shown in Figure 1 are configured to extend the "X-forwarded-For" HTTP header with the client's IP address.

More precisely, the HTTP proxy servers 11a, 11b, 11c are configured such that the respective "X-forwarded-For" HTTP header is added/modified such that the HTTP header received at the web application server does not only comprise the IP address of the HTTP proxy server which in the chain of HTTP proxy servers between the client and the web application is closest to the web application server (here: the HTTP proxy server 11c), but also the IP addresses of all other HTTP proxy servers between the web application server, and the client (here: the HTTP proxy servers 11a, 11b), as well as the client's IP address (here: the IP address of the client computer 2).

Again, after having detected the client's IP address (here: the IP address of the client computer 2), the above "country / location lookup table" 7 shown in Figure 2 is used to determine which country / location is associated with the respective IP address (i.e., the detected IP address of the client computer 2).

If a user via a respective web client (here: the client computer 2) accesses the web application stored in the server computer 4 by use of a "secure" Internet /Intranet connection, in particular, a TLS (Transport Layer Security) / SSL (Secure Sockets Layer) connection, according to an embodiment of the invention, the following procedure might be applied to detect the client's IP address, and the country / location associated with the respective IP address:

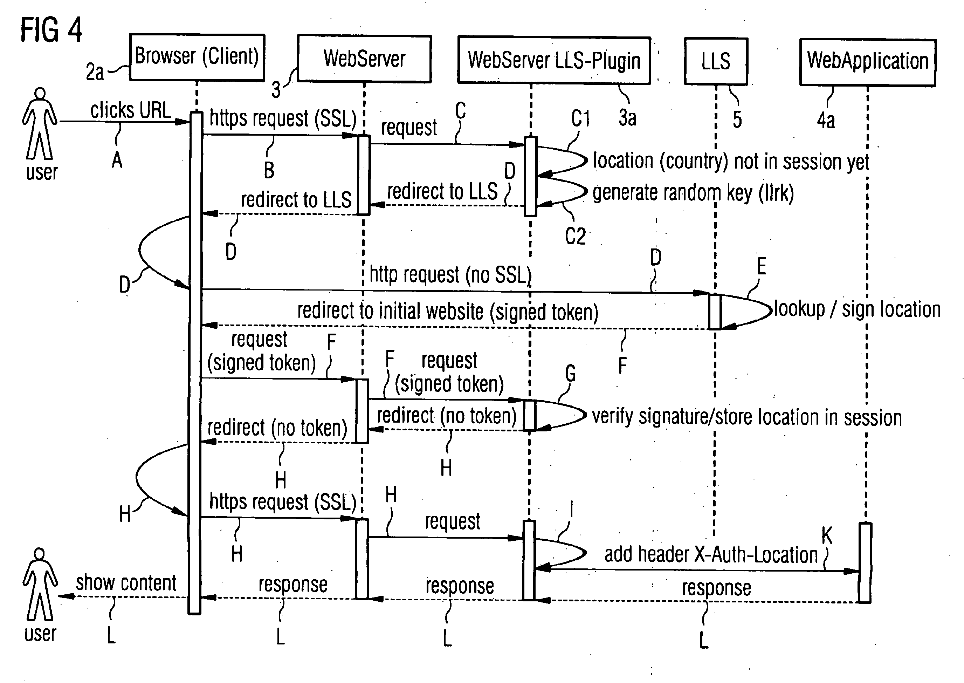

First, the user, by use of the web browser 2a running on the client computer 2, requests access to the web application 4a stored in the server computer 4. For this purpose, the respective web address / URL (Uniform Resource Locator), e.g.
"https://myapp.mycompany.com/app-path/"
is entered into the web browser, and is "clicked" by the user (see also Figure 4, arrow "A"). Thereby, "https" signifies that the connection is to be a "secure" Internet / Intranet connection (whilst "http" would have signified that the connection is to be a normal, "un-secure" connection). Further, "myapp.mycompany.com" is the web address / URL of the server computer 4 on which the web application 4a is stored, and "app-path/" the name of the path where the web application 4a is stored on the server computer 4.

As is shown in Figures 3 and 4, the https - request of the user is e.g. intercepted by a web server 3 located between the client computer 2, and the server computer 4 on which the web application 4a is stored, or a specific program 3 stored on the server computer 4 (see also Figure 4, arrow "B", Figure 3, arrow "1.").

Then, a request to a LLS-Plugin 3a, e.g., an apache module, stored on the web server / server computer is issued (see Figure 4, arrow "C").

The LLS-Plugin 3a - as will be described in further detail below - checks whether or not the respective country / location information for the client computer 2 has already been determined (see Figure 4, arrow "C1"). If not, the LLS-Plugin 3a for the respective request of the web browser 2a generates a random key (here: a parameter llrk) (see Figure 4, arrow "C2"), and stores the generated random key for later validation in the HTTP session context of the client computer 2.

Further, the LLS-Plugin 3a redirects the request of the web browser 2a to a central location lookup server 5 (see Figure 4, arrows "D", as well as Figure 3, arrow "2."). Thereby, the originally entered web address / URL of the server computer 4 on which the web application 4a is stored, and the name of the path where the web application 4a is stored on the server computer 4 are provided (here: by use of a parameter llurl), as well as the random key generated by the LLS-Plugin 3a (here: the above parameter llrk). In particular, the above parameters llurl and llrk are provided as URL encoded request parameters of the redirected request of the web browser 2a to the central location lookup server 5.

For instance, the request of the web browser 2a may be redirected by the LLS-Plugin 3a using a redirection web address
"http://lls.mycompany.com/lls/lookup?llurl=https%3A%2F%2Fmyapp.mycompany. com%2Fapp-path%2F&llrk=wahczcmssrrmrlxlpuv".

Thereby, "http" signifies that the connection is to be a normal, "non-secure" Internet / Intranet connection (whilst "https" would have signified that the connection is to be a "secure" TLS- / SSL-connection). Further, "lls.mycompany.com" is the web address / URL of the central location lookup server 5 to which the request is redirected, and "lls/" the name of the path where a respective location lookup service program 5a is stored on the central location lookup server 5. Further, as already mentioned, the URL encoded request parameter llurl (here: "myapp.mycompany.com", and "app-path/") signifies the web address / URL of the originally requested server computer 4, and the name of the path where the originally requested web application 4a is stored on the server computer 4. In addition, as also already mentioned, the URL encoded request parameter llrk (here: "wahczcrnssrrmrlxlpuv") signifies the above random key generated by the LLS-Plugin 3a.

As the (redirected) connection between the client computer 2 / web browser 2a, and the central location lookup server 5 is a normal, "non-secure" Internet / Intranet connection (in particular, not a TLS- / SSL-connection), the location lookup service program 5a stored on the central location lookup server 5 may then correspondingly similar as explained above detect the IP address of the web client /client computer 2:

In particular, if the web client / client computer 2 via the above redirected connection accesses the central location lookup server 5 directly - without any intermediate HTTP proxy server -, the IP address of the web client / client computer corresponds to the "remote-address" of the respective - redirected - TCP/IP connection.

If - as is shown in Figure 1 - the web client / client computer 2 via the above redirected connection accesses the central location lookup server 5 via one or several of the above HTTP proxy servers (here: the HTTP proxy servers 11 a, 11 b, 11 c), the IP address of the web client / client computer 2 does not correspond to the "remote-address" of the respective - redirected - TCP/IP connection.

However, as explained above, all the (tens or hundreds or thousands) HTTP proxy servers 11a, 11b, 11c in the Intranet computer system 1 shown in Figure 1 are configured to extend the "X-forwarded-For" HTTP header with the client's IP address.

More precisely, as explained above, the HTTP proxy servers 11a, 11b, 11c add/modify the respective "X-forwarded-For" HTTP header such that the HTTP header received at the central location lookup server 5 not only comprises the IP address of the HTTP proxy server which in the chain of HTTP proxy servers between the client computer 2 and the central location lookup server 5 is closest to the central location lookup server 5 (here: the HTTP proxy server 11c), but also the IP addresses of all other HTTP proxy servers between the central location lookup server 5, and the client computer 2 (here: the HTTP proxy servers 11a, 11b), as well as the IP address of the client computer 2.

In particular, the IP address of the client computer 2 corresponds to the last entry of the "X-forwarded-For" HTTP header received at the central location lookup server 5.

After having detected the client's IP address (here: the IP address of the client computer 2), the above "country / location lookup table" 7 shown in Figure 2 is used by the location lookup service program 5a stored on the central location lookup server 5 to determine which country / location is associated with the respective IP address (i.e., the detected IP address of the client computer 2) (see Figure 4, arrow "E").

The "country / location lookup table" 7 - as is shown in Figure 3 - e.g. might be stored in a respective IP-Lookup File or Databank (DB) 7a of the central location lookup server 5

For instance, if it was detected by the location lookup service program 5a stored on the central location lookup server 5 that the IP address of the client computer 2 is "163.52.128.72", according to the table 7 shown in Figure 2, the respective client computer 2 is located in Switzerland (country code: "CH").

If the detected IP address is not contained in the table 7 shown in Figure 2, or if the IP address is stored in the table 7, but without an associated country code, or if the associated country code e.g. is "XB", signifying that the country / location is unknown, it is detected by the location lookup service program 5a that no country location is associated with the respective IP address.

After detecting the country / location, a token (string sequence) is created by the location lookup service program 5a stored on the central location lookup server 5 comprising the following information:
<serial-id><timestamp GMT><valid seconds><version><country code><random key>

The string <serial-id> (e.g., "4131213") is an ID to make the token unique. For instance, a first token generated by the location lookup service program 5a stored on the central location lookup server 5 may be given a first number, a second token generated by the location lookup service program 5a may be given a second, different number, a third token generated by the location lookup service program 5a may be given a third number (different from the first and second numbers), etc., e.g. by use of a counter (which e.g. is reset after a certain period of time, or e.g. is automatically reset after having reached a certain maximum number).

Further, the string <timestamp GMT> (e.g., "20050714084300GMT") signifies the time when the respective token was generated (by giving the respective information regarding e.g. the date (year, month, day of the month), time (hours, minutes, seconds), time-zone, etc.).

In addition, the string <valid seconds> signifies for how long - e.g. from the point of time defined by the string <timestamp GMT> - the respective token is valid (e.g., several minutes or seconds, preferably, a relatively short amount of time, e.g. less than 40 or 20 seconds, etc.).

Further, the string <version> (e.g., "1") signifies the version used for the token's syntax, such that a syntax different from the syntax explained here might also be used in the future (under a different <version> number (e.g., "2")).

Still further, the string <country code> is the country code detected as explained above by the location lookup service program 5a stored on the central location lookup server 5 by use of the "country / location lookup table" 7 (e.g., the above 2-digit country code according to ISO-3166).

Finally, the string <random key> is the above random key generated by the LLS-Plugin 3a (i.e., corresponds to the above parameter llrk (here: "wahczcmssrrmrlxlpuv")).

The above token (string sequence) / the above information contained in the token is then signed with a private key 5b of the location lookup service program 5a / the central location lookup server 5 (see also Figure 3), e.g. using a sign algorithm such as SHA1withRSA.

The token (string sequence), and the token's signature are then URL encoded, and added to the originally requested web address / URL (more exactly, the web address / URL of the server computer 4 on which the web application 4a is stored, and the path where the web application 4a is stored on the server computer 4, as defined by the above parameter Ilurl).

In more detail, the location lookup service program 5a redirects the request of the web browser 2a back to the above server computer 4, and the respective redirected request - again - is intercepted by the above LLS-Plugin 3a (see Figure 4, arrows "F", as well as Figure 3, arrow "3."). Thereby, the above token (string sequence) and the token's signature are provided (here: by use of a parameter llinfo) as URL encoded request parameter of the redirected request of the web browser 2a to the server computer 4.

For instance, the request of the web browser 2a may be redirected by the location lookup service program 5a to the LLS-Plugin 3a using a redirection web address
"https://myapp.mycompany.com/app-path/?Ilinfo=AlAdP-DKhLwX...".

Thereby, "https" signifies that the connection is to be a "secure" Internet / Intranet connection, here: a TLS- / SSL-connection. Further, "myapp.mycompany.com/app-path/" signifies the web address / URL of the originally requested server computer 4, and the name of the path where the originally requested web application 4a is stored on the server computer 4. In addition, as already mentioned, the URL encoded request parameter llinfo (here: "AlAdP-DKhLwX...") signifies the above token, and the token's signature.

The LLS-Plugin 3a then takes the provided token, and the associated signature by performing respective URL decoding.

Then, the LLS-Plugin 3a verifies the token and the token's signature by using a public key 3c of the LLS-Plugin 3a / the web server / server computer 4, corresponding to the above private key 5b of the location lookup service program 5a /the central location lookup server 5 (see also Figure 3).

Further, the LLS-Plugin 3a verifies that the received random key (i.e., the random key according to the string <random key> of the above token) corresponds to the above random key generated by the LLS-Plugin 3a (i.e., corresponds to the above parameter llrk (here: "wahczcrnssrrmrlxlpuv")), and that the respective random key was previously issued by the LLS-Plugin 3a (e.g., within a predetermined amount of time, e.g., several minutes or seconds), i.e., that the random key is still valid.

In addition, the LLS-Plugin 3a checks whether or not the token is still valid by use of the strings <timestamp GMT>, and <valid seconds> of the above token (e.g., by checking whether or not a point of time defined by the point of time according to the string <timestamp GMT>, plus a period of time defined by the string <valid seconds> has already passed).

Still further, the LLS-Plugin 3a checks whether or not the token ID defined by the string <serial-id> had been used already within the period of time defined by the above string <valid seconds>.

Then, the LLS-Plugin 3a stores the token ID (i.e., the string <serial-id>), so as to be able to compare future token IDs of future requests with the stored token ID (to detect whether or not a future token ID - also defined by a respective string <serial-id> - had been used already within a period of time defined by a respective string <valid seconds>, as explained above).

Further, the country / location information as defined by the string <country code> is stored by the LLS-Plugin 3a in the HTTP session context of the client computer 2 (see Figure 4, arrow "G"). This e.g. is done to allow the LLS-Plugin 3a - as explained above (see Figure 4, arrow "C1") - to check in the future whether or not the respective country / location information for the client computer 2 has already been determined.

The above storing in the HTTP session context can e.g. be realized using the SSL-Session-ID, a session cookie, or URL-rewriting.

When all of the above checks / verifications had been successful, the LLS-Plugin 3a newly redirects the request of the web browser 2a to the above server computer 4, and the respective new redirected request - again - is intercepted by the above LLS-Plugin 3a (see Figure 4, arrows "H", as well as Figure 3, arrow "4."). Contrary to the previous redirect, however, in the new redirected request, the above token / token's signature are not provided as URL encoded request parameter.

For instance, the request of the web browser 2a may be redirected by the LLS-Plugin 3a using a redirection web address
"https://myapp.mycompany.com/app-path/"
i.e., a web address which corresponds to the web address originally entered into the web browser, i.e., originally "clicked" by the user (see also Figure 4, arrow "A").

Thereby, "https" signifies that the connection is to be a "secure" Internet / Intranet connection, here: a TLS- / SSL-connection. Further, "myapp.mycompany.com/app-path/" signifies the web address / URL of the originally requested server computer 4, and the name of the path where the originally requested web application 4a is stored on the server computer 4.

As as said above the country / location information as defined by the string <country code> was stored by the LLS-Plugin 3a in the HTTP session context of the client computer 2 (see Figure 4, arrow "G"), for the new redirected request, it is detected by the LLS-Plugin 3a that the respective country / location information for the client computer 2 had already been determined (see Figure 4, arrow "I").

The respective country / location information is then forwarded by the LLS-Plugin as HTTP header to the originally requested web application 4a stored on the server computer 4 (see Figure 4, arrow "K"), e.g. by adding an HTTP header "X-Auth-Location".

The web application 4a then responds to the request of the web browser 2a (see Figure 4, arrows "L"), and the content as provided by the web application 4a is shown on the user's web browser 2a.

The content shown at the web browser 2a, and/or the rights of the user may depend on the country/location information as detected above.

For instance, some data of the web application 4a may only be accessed (shown at the web browser 2a), and/or amended by the user if it was detected that the respective web client / client computer 2 is located at a predetermined country /location (or a predetermined set of countries / locations).

Instead or in addition, correspondingly similar, some (other) data may not be accessed (shown at the web browser 2a), and/or may not be amended by the user if it was detected that the respective web client / client computer 2 is located at a predetermined country / location (or a predetermined set of countries / locations), etc.

Still further, some (further) data may not be accessed, and/or may not be amended if the detected country code for the respective web client / client computer 2 is "XB", signifying that the country / location is unknown.

Although specific embodiments have been illustrated and described herein, it will be appreciated by those of ordinary skill in the art that a variety of alternate and/or equivalent implementations may be substituted for the specific embodiments shown and described without departing from the scope of the present invention. This application is intended to cover any adaptations or variations of the specific embodiments discussed herein. Therefore, it is intended that this invention be limited only by the claims and the equivalents thereof.

## Claims

1. A method for operating a computer network (1), comprising the steps:
(a) from a first device (2) of the network (1), requesting access to a second device (4) of the network (1), where the access request is a secure Internet connection request;
(b) redirecting the request to the first device (2), and from there to a third device (5) of the network (1), wherein the request redirected to the third device (5) is an un-secure Internet connection request;
(c) detecting an address of the first device (2) within the network (1) and detecting location information associated with the first device (2) by use of the third device (5);
(d) redirecting the request including said detected location information to the second device (4).

2. The method of claim 1, wherein the address is an IP address.

3. The method of claim 2, wherein the address is comprised in an HTTP header.

4. The method of any of the claims 2 - 3, wherein step (c) comprises: determining location information associated with the detected IP address.

5. The method of any of the preceding claims, wherein the location information is information regarding the country where the first device (2) is located.

6. The method of any of the preceding claims, wherein the first or second or third device (2, 4, 5) comprises a computer.

7. A computer network (1), adapted to perform a method as defined in any of claims 1 - 6.

8. A computer program with program code for performing the method steps indicated in any of claims 1 to 6 when the program is executed on a plurality of computers.

9. The computer program with program code according to claim 8, wherein the computer program is stored on a computer-readable storage medium.

## Patentansprüche

1. Verfahren zum Betreiben eines Computer-Netzwerks (1), das die folgenden Schritte umfasst:
(a) von einer ersten Vorrichtung (2) des Netzwerks (1), Anfordern des Zugriffs zu einer zweiten Vorrichtung (4) des Netzwerks (1), wobei die Zugriffs-Anfrage eine sichere Internet-Verbindungs-Anfrage ist;
(b) Weiterleiten der Anfrage an die erste Vorrichtung (2) und von dort an eine dritte Vorrichtung (5) des Netzwerks (1), wobei die an die dritte Vorrichtung (5) weitergeleitete Anfrage eine nicht sichere Internet-Verbindungs-Anfrage ist;
(c) Ermitteln einer Adresse der ersten Vorrichtung (2) in dem Netzwerk (1) und Ermitteln von Orts-Information, die mit der ersten Vorrichtung (2) assoziiert ist, mittels der dritten Vorrichtung (5);
(d) Weiterleiten der Anfrage einschließlich der ermittelten Orts-Information an die zweite Vorrichtung (4).

2. Verfahren nach Anspruch 1, wobei die Adresse eine IP-Adresse ist.

3. Verfahren nach Anspruch 2, wobei die Adresse in einem HTTP-Header enthalten ist.

4. Verfahren nach einem der Ansprüche 2 bis 3, wobei Schritt (c) das Ermitteln von Orts-Information, die mit der ermittelten IP-Adresse assoziiert ist, umfasst.

5. Verfahren nach einem der vorhergehenden Ansprüche, wobei die Orts-Information Information hinsichtlich des Landes ist, in dem sich die erste Vorrichtung (2) befindet.

6. Verfahren nach einem der vorhergehenden Ansprüche, wobei die erste oder die zweite oder die dritte Vorrichtung (2, 4, 5) einen Computer aufweist.

7. Computer-Netzwerk (1), das so ausgelegt ist, dass es ein Verfahren nach einem der Ansprüche 1 bis 6 durchführt.

8. Computerprogramm mit einem Programm-Code zum Durchführen der in einem der Ansprüche 1 bis 6 angegebenen Verfahrensschritte, wenn das Programm auf einer Vielzahl von Computern ausgeführt wird.

9. Computerprogramm mit einem Programm-Code nach Anspruch 8, wobei das Computerprogramm auf einem computerlesbaren Speichermedium gespeichert ist.

## Revendications

1. Procédé d'utilisation d'un réseau informatique (1), comprenant les étapes de :
(a) à partir d'un premier dispositif (2) du réseau (1), demande d'accès à un deuxième dispositif (4) du réseau (1), où la demande d'accès est une demande de connexion Internet sécurisée ;
(b) redirection de la demande jusqu'au premier dispositif (2), et de là jusqu'à un troisième dispositif (5) du réseau (1), dans lequel la demande redirigée jusqu'au troisième dispositif (5) est une demande de connexion Internet non sécurisée ;
(c) détection d'une adresse du premier dispositif (2) au sein du réseau (1) et détection d'une information de localisation associée avec le premier dispositif (2) par l'utilisation du troisième dispositif (5) ;
(d) redirection de la demande incluant ladite information de localisation détectée jusqu'au deuxième dispositif (4).

2. Procédé selon la revendication 1, dans lequel l'adresse est une adresse IP.

3. Procédé selon la revendication 2, dans lequel l'adresse est comprise dans un en-tête http.

4. Procédé selon l'une quelconque des revendications 2 à 3, dans lequel l'étape (c) comprend : la détermination de l'information de localisation associée avec l'adresse IP détectée.

5. Procédé selon l'une quelconque des revendications précédentes, dans lequel l'information de localisation est une information concernant le pays où le premier dispositif (2) est localisé.

6. Procédé selon l'une quelconque des revendications précédentes, dans lequel le premier ou le deuxième ou le troisième dispositif (2, 4, 5) comprend un ordinateur.

7. Réseau informatique (1), adapté pour mettre en oeuvre un procédé selon l'une quelconque des revendications 1 à 6.

8. Programme informatique avec un code de programme pour mettre en oeuvre les étapes de procédé selon l'une quelconque des revendications 1 à 6 lorsque le programme est exécuté sur une pluralité d'ordinateurs.

9. Programme informatique avec un code de programme selon la revendication 8, dans lequel le programme informatique est stocké sur un support de stockage lisible par un ordinateur.
